# EUROPÄISCHE PATENTSCHRIFT

(11) **EP 2 848 578 B1**
(45) Veröffentlichungstag und Bekanntmachung des Hinweises auf die Patenterteilung: **17.08.2016**
(21) Anmeldenummer: 14184367.2
(22) Anmeldetag: 11.09.2014
(51) Int. Cl.: B67C 3/20, B65B 3/12, B65B 3/18, B65B 3/32, G01F 11/02

(54) **Vorrichtung zur Dosierung eines Füllprodukts in einen zu befüllenden Behälter**
Apparatus for dosing a filling product into a container to be filled
Dispositif pour doser un produit dans un récipient à remplir

(30) Priorität: 11.09.2013 DE 102013109969
(43) Veröffentlichungstag der Anmeldung: 18.03.2015
(73) Patentinhaber: Krones AG, 93073 Neutraubling (DE)
(72) Erfinder: Goldbrunner, Christian, 93073 Neutraubling (DE); Engelsberger, Florian, 93073 Neutraubling (DE); Faltermeier, Manfred, 93073 Neutraubling (DE); Koller, Stefan, 93073 Neutraubling (DE); Schuhbeck, Thomas, 93073 Neutraubling (DE)
(74) Vertreter: Nordmeyer, Philipp Werner

(56) Entgegenhaltungen:
- EP-A1- 0 775 635
- EP-A1- 0 999 176
- EP-A1- 1 647 519
- DE-C2- 2 321 206
- US-A- 3 850 345
- US-A- 4 230 160
- US-A- 5 400 927

## Beschreibung

### Technisches Gebiet

Die vorliegende Erfindung betrifft eine Vorrichtung zum Dosieren eines Füllprodukts in einen zu befüllenden Behälter, bevorzugt zum Dosieren eines viskosen und/oder pastösen Füllprodukts wie beispielsweise Sahne, Joghurt, Marmelade, Ketchup, Mayonnaise und/oder Babybrei.

### Stand der Technik

Es sind im Rundlaufverfahren arbeitende Vorrichtungen zum Dosieren von Füllprodukten in zu befüllende Behälter bekannt, bei welchen am Umfang eines Produktvorhaltebehälters mehrere Dosiereinheiten vorgesehen sind, welche jeweils einen Dosierzylinder und einen in diesem verschiebbar angeordneten Dosierkolben aufweisen.

In den Dosiereinheiten wird das im Produktvorhaltebehälter vorgehaltene Füllprodukt mittels des Dosierkolbens in den Dosierzylinder angesaugt und dann das angesaugte Volumen aus einem Füllproduktauslass in den darunter angeordneten, zu befüllenden Behälter ausgegeben. Entsprechend wird eine präzise Volumendosierung über den im Dosierzylinder zwangsgeführt bewegten Dosierkolben erreicht, welcher wechselweise aus dem Produktvorhaltebehälter Füllprodukt ansaugt und dieses dann über eine Produktauslassöffnung in den zu befüllenden Behälter ausschiebt.

Die entsprechende Schaltung der produktführenden Wege, also eines Produktkanals zwischen dem Dosierzylinder und dem Produktvorhaltebehälter, und eines Ausstoßkanals zwischen dem Dosierzylinder und der Ausstoßöffnung, wird jeweils über Ventile erreicht. Hierzu werden beispielsweise horizontale Drehschieber, vertikale Drehventile, Rückschlagventile oder Sitzventile verwendet.

Aus der FR 2 851 764 A1 ist eine Vorrichtung mit einem Produktvorhaltebehälter und an diesem angebrachten Dosiereinheiten bekannt. Die Dosiereinheiten umfassen einen am Umfang des Produktvorhaltebehälters angebrachten Dosierzylinder, in welchem ein Dosierkolben kurvengesteuert geführt wird und welcher zwei pneumatisch gesteuerte Ventile aufweist. Das erste Ventil, welches als Ansaugventil ausgebildet ist, ist zwischen dem Dosierzylinder und dem Auslassventil positioniert und schaltet den Produktkanal vom Produktvorhaltebehälter in den Dosierzylinder. Das Ansaugventil ist als Sitzventil ausgeführt, und lässt sich in radialer Richtung öffnen und schließen. Das Auslassventil ist unterhalb des Ansaugventils in Achsenrichtung des Dosierzylinders angebracht und umfasst im Wesentlichen einen doppelt wirkenden Pneumatikzylinder, durch welchen das Füllprodukt beim Ausschieben hindurchgeführt wird.

Durch die bekannten Anordnungen, bei welchen ein radial betätigbares Sitzventil den Produktvorhaltebehälter mit dem Dosierzylinder verbindet, kann eine ausreichende Entlüftung der Unterseite des Dosierkolbens nicht erreicht werden, so dass eine hohe Füllgenauigkeit aufgrund des vorhandenen kompressiblen Luftkissens im Dosierzylinder nicht erreicht werden kann. Weiterhin ist ein Entleeren des Produktvorhaltebehälters zum Ende des Füllvorganges hin problematisch.

Die US 5,400,927 A beschreibt eine Abfüllvorrichtung mit einem Abdichtungssystem für flüssige bzw. fließfähige Produkte.

### Darstellung der Erfindung

Entsprechend ist es eine Aufgabe der vorliegenden Erfindung, eine Vorrichtung zum Dosieren eines Füllproduktes anzugeben, welche eine höhere Füllgenauigkeit ermöglicht.

Diese Aufgabe wird durch eine Vorrichtung zum Dosieren eines Füllprodukts mit den Merkmalen des Anspruchs 1 gelöst. Vorteilhafte Weiterbildungen ergeben sich aus den Unteransprüchen.

Entsprechend wird eine Vorrichtung zum Dosieren eines Füllproduktes in einen zu befüllenden Behälter vorgeschlagen, umfassend eine Dosiereinheit mit einem Dosierzylinder und einem darin zwischen einem oberen Totpunkt und einem unteren Totpunkt verschiebbar angeordneten Dosierkolben, sowie einem Ansaugventil mit einem Ventilsitz zum Ansaugen des Füllproduktes aus einem rotierbaren Produktvorhaltebehälter. Erfindungsgemäß ist der Ventilsitz im Betrieb auf einer Ebene oberhalb der durch den Boden des Dosierkolbens am unteren Totpunkt ausgebildeten Ebene angeordnet.

Dadurch, dass der Ventilsitz im Betrieb auf einer Ebene oberhalb der durch den Boden des Dosierkolbens an dessen unterem Totpunkt ausgebildeten Ebene angeordnet ist, kann erreicht werden, dass ein eventuell unterhalb des Bodens des Dosierkolbens vorliegendes Luftkissen über das darüber liegende Ansaugventil in den Produktvorhaltebehälter zurückströmen kann. Entsprechend ergibt sich hieraus, dass ein unterhalb des Bodens des Dosierkolbens angeordnetes Luftkissen reduziert wird beziehungsweise vollständig abgebaut werden kann, so dass eine zuverlässige Befüllung des zu befüllenden Behälters mit dem vorgesehenen Volumen an Füllprodukt erreicht wird.

Weiterhin kann auf diese Weise zu Beginn der Produktion der Dosierzylinder mit dem Dosierkolben auf der Unterseite des Dosierkolbens entlüftet werden und sich während der Produktion ansammelndes Gas beziehungsweise ansammelnde Luft kann abgeleitet werden, so dass sich ein Luftpolster oder ein anderes Gaspolster unterhalb des Bodens des Dosierkolbens nicht oder nur sehr wenig ausbildet. Durch die Verringerung beziehungsweise Vermeidung eines nicht definierten Luft- und/oder Gaspolsters in dem Dosierzylinder kann die Dosiergenauigkeit der Vorrichtung weiter verbessert werden.

Der Produktvorhaltebehälter weist eine Bodenplatte auf, in der mindestens ein Druckmedienkanal zur Beaufschlagung mindestens eines Ventilantriebs des Ansaugventils und/oder eines Auslassventils mit einem Druckmedium vorgesehen. Als Druckmedienkanal kann beispielsweise ein Druckluftkanal in die Bodenplatte des Produktvorhaltebehälters eingebracht werden, der den jeweiligen Ventilantrieben der Dosiereinheit Druckluft zur Verfügung stellt. Der Druckluftkanal muss nicht geschaltet sein, sondern kann gleichbleibend Druckluft bereitstellen. In gleicher Weise kann auch ein Abluftkanal vorgesehen sein, mittels welchem die verbrauchte Druckluft abgeführt werden kann, ohne dass diese in den Abfüllbereich gelangt.

Die Vorrichtung umfasst weiterhin bevorzugt einen rotierbaren Produktvorhaltebehälter, an dessen Umfang die Dosiereinheit anordenbar ist. Dabei ist das Ansaugventil und insbesondere der Ventilsitz des Ansaugventils bevorzugt an der Unterseite des Produktvorhaltebehälters angeordnet. Auf diese Weise ist es möglich, dass das sich im Produktvorhaltebehälter befindliche Füllprodukt vollständig aus dem Produktvorhaltebehälter ausläuft, ohne dass ein großer Anteil an Umgebungsluft eingesaugt wird. Im Gegensatz zu den aus dem Stand der Technik bekannten, radial angeordneten Ansaugventilen, bei welchen bei einem nicht mehr ausreichenden Füllstand des Produktvorhaltebehälters zumindest im oberen Bereich des Ansaugventils bereits Luft angesaugt wird, ist durch eine im Wesentlichen waagerechte Anordnung des Ventilsitzes sichergestellt, dass bei einer auch nur geringen Bedeckung des Ansaugventils mit Füllprodukt noch ein vollständiges Ansaugen von Füllprodukt stattfindet, und gleichzeitig das Ansaugen von Luft verhindert wird.

Entsprechend kann durch die vorgeschlagene Anordnung derart, dass der Produktvorhaltebehälter an seiner Unterseite mit dem Ansaugventil verbunden ist und bevorzugt entsprechend der Ventilsitz waagerecht an der Unterseite des Produktvorhaltebehälters angeordnet ist, erreicht werden, dass eine genaue Dosierung des Füllproduktes bis fast zur vollständigen Entleerung des Produktvorhaltebehälters möglich ist. Entsprechend muss weniger Füllprodukt am Ende des Dosierzyklus verworfen werden. Weiterhin kann die Genauigkeit der Einhaltung des dosierten Volumens verbessert werden, da weniger Luft angesaugt wird.

In einer weiteren bevorzugten Ausbildung stehen das Ansaugventil und der Dosierzylinder über einen Produktkanal miteinander in Fluidverbindung, wobei der Produktkanal im eingebauten Zustand bevorzugt schräg nach oben zum Ansaugventil hin verläuft. Damit ist der Produktkanal auch schräg bezüglich einer Hubrichtung des Dosierkolbens angeordnet.

Durch den entsprechenden schrägen Verlauf des Produktkanals wird es möglich, ein Ausstoßen eines Gaspolsters, welches sich unterhalb des Bodens des Dosierkolbens angesammelt hat, über den Produktkanal und das Ansaugventil in den Produktvorhaltebehälter zu ermöglichen. Entsprechend sammelt sich auch im Produktkanal kein Gas- beziehungsweise kein Luftpolster an, so dass auch hier die Dosiergenauigkeit weiter erhöht werden kann. Der untere Totpunkt des Dosierkolbens im Dosierzylinder liegt dabei bevorzugt so, dass die Ebene des Bodens des Dosierkolbens zumindest auf gleicher Ebene beziehungsweise unterhalb der Oberkante des Produktkanals liegt. So kann unterhalb des Bodens des Dosierkolbens vorliegende Luft beziehungsweise Gas über den Produktkanal und das Ansaugventil in den Produktvorhaltebehälter ausströmen.

Der Dosierkolben im Dosierzylinder, das Ansaugventil und ein Auslassventil werden bevorzugt mechanisch über eine Kurvenführung beziehungsweise Zwangssteuerung, pneumatisch, elektropneumatisch, elektromagnetisch und/oder elektromotorisch angesteuert beziehungsweise betätigt.

In einer besonders bevorzugten Ausführungsform werden zumindest sowohl Ansaugventil als auch Auslassventil pneumatisch angesteuert, wobei entsprechende Schalter für die pneumatische Ansteuerung über Schaltnocken betätigt werden, welche während des Umlaufs der Dosierzylinder am feststehenden Gestell der Vorrichtung an feststehenden oder aktivierbaren/schaltbaren Schaltmitteln mechanisch geschaltet werden. Hierdurch wird zum einen ein besonders einfacher Aufbau ermöglicht, welcher eine aufwändige Steuerung vermeidet, und zum anderen kann, beispielsweise im Falle fehlender zu befüllender Behälter oder im Falle defekter Dosiereinheiten, die Schaltung der jeweiligen Ventile über die Nocken einfach mechanisch ausgesetzt werden.

Ein Ansaugventil in Form eines Sitzventils und/oder ein Auslassventil beispielsweise in Form eines Sitzventils oder eines doppelt wirkenden Pneumatikzylinders werden bevorzugt entlang einer Achse betätigt, welche parallel zur Hubachse des Dosierkolbens im Dosierzylinder ist. Durch diese Anordnung wird es ermöglicht, dass der Produktstrom durch das Ansaugventil im Wesentlichen axial entlang des Ventilstößels strömt, dann im Dosierzylinder angesaugt und von diesem wieder ausgetrieben wird, und dann wiederum im Wesentlichen axial entlang der beweglichen Teile des Ausstoßventils strömt.

Eine Abdichtung der beweglichen Teile der jeweiligen Ventile gegenüber der Umgebung beziehungsweise gegenüber dem Füllprodukt kann mittels Faltenbälgen erreicht werden. Dies führt zu einer bevorzugten Umströmung der Faltenbälge, wobei faserige Bestandteile des Dosiergutes weniger leicht zwischen den Falten liegen bleiben und die daraus resultierende Umströmung des Faltenbalgs zu einer reduzierten Wechsellastbeanspruchung des Faltenbalges führt im Vergleich zu einer sich quer zum Faltenbalg erstreckenden Anströmung bei einer radialen Anordnung des Ansaugventils. So können die mechanischen Verschleißkomponenten verringert werden.

Die Dosiereinheit umfassend das Ansaugventil, den Dosierzylinder mit dem Dosierkolben und das Auslassventil samt Auslasskanal ist bevorzugt modular aufgebaut, derart, dass die Dosiereinheit als funktionsbereite Einheit an dem Produktvorhaltebehälter angebracht und von diesem wieder entfernt werden kann. Durch den modularen Aufbau kann im Falle eines Defektes die gesamte Dosiereinheit einfach modular ausgetauscht werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Schnittdarstellung einer Vorrichtung zum Dosieren eines Füllprodukts in einem ersten Ausführungsbeispiel;
- Figur 2: eine Vorrichtung zum Dosieren eines Füllproduktes in einem zweiten Ausführungsbeispiel; und
- Figur 3: eine Detaildarstellung einer an dem Produktvorhaltebehälter angebrachten Dosiereinheit gemäß Figur 2.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

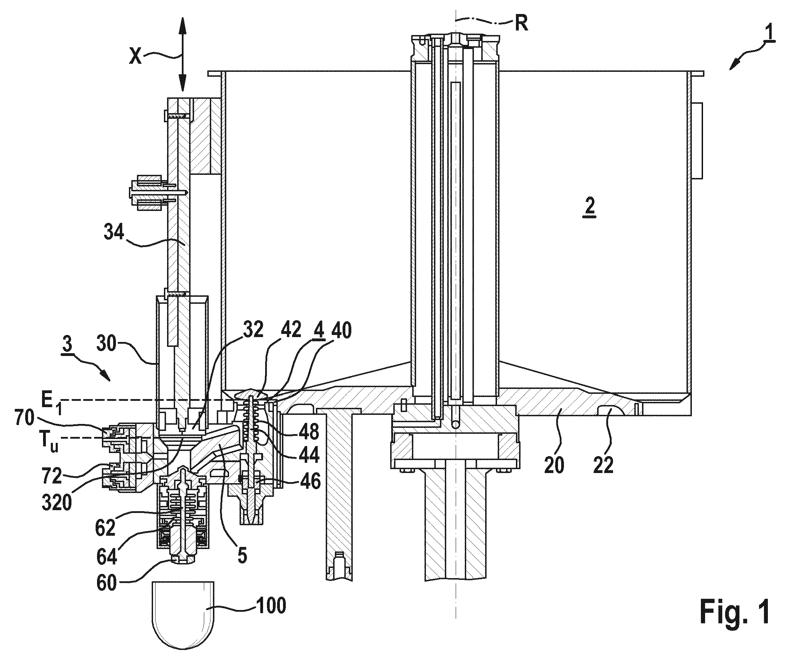

Figur 1 zeigt eine Vorrichtung 1 zum Dosieren eines Füllprodukts in einen schematisch angedeuteten zu befüllenden Behälter 100. Die Vorrichtung 1 dient insbesondere dazu, viskose und/oder pastöse Füllprodukte in den Behälter 100 zu dosieren, um innerhalb einer vorgegebenen Zeit ein vorbestimmtes Volumen des Füllproduktes in den Behälter 100 einzudosieren.

Das zu dosierende Füllprodukt wird in einem Produktvorhaltebehälter 2 vorgehalten und über eine Dosiereinheit 3 in den Behälter 100 eindosiert.

Die Dosiereinheit 3 weist einen Dosierzylinder 30 auf, in welchem ein Dosierkolben 32 verschiebbar angeordnet ist, der über ein Gestänge 34 im Dosierzylinder 30 zwischen einem oberen Totpunkt und einem unteren Totpunkt Tᵤ auf und ab bewegbar ist. Durch die Auf- und Abbewegung des Dosierkolbens 32 im Dosierzylinder 30 wird entsprechend unterhalb des Bodens 320 des Dosierkolbens 32 ein veränderbarer Hohlraum erzeugt, der beim Anheben des Dosierkolbens 32 einen Unterdruck erzeugt, mittels welchem das Füllprodukt aus dem Produktvorhaltebehälter 2 angesaugt wird. Bei einer Abwärtsbewegung des Dosierkolbens 32 wird das Füllprodukt in den zu befüllenden Behälter 100 ausgetrieben.

Die Zufuhr des Füllprodukts aus dem Produktvorhaltebehälter 2 wird über ein Ansaugventil 4 erreicht, welches mit der Bodenplatte 20 des Produktvorhaltebehälters 2 direkt verbunden ist. Das Ansaugventil 4 weist einen Ventilsitz 40 auf, welcher im Betrieb im Wesentlichen waagerecht angeordnet ist. Auf dem Ventilsitz 40 sitzt der Ventilteller 42 zum Abdichten beziehungsweise Öffnen des Ansaugventils 4 auf. Der waagerecht angeordnete Ventilsitz 40 schließt in dem in Figur 1 gezeigten Ausführungsbeispiel mit der Bodenplatte 20 des Produktvorhaltebehälters 2 im Wesentlichen bündig ab. Entsprechend kann Füllprodukt, welches im Produktvorhaltebehälter 2 vorgehalten wird, über das Ansaugventil 4 durch den Ventilsitz 40 hindurch und über einen Produktkanal 5 an die Unterseite des Dosierkolbens 32 gelangen, und wird von diesem entsprechend in den Dosierzylinder 30 eingesaugt.

Damit wird zum Dosieren eines im Produktvorhaltebehälter 2 aufgenommenen Füllprodukts zunächst das Ansaugventil 4 geöffnet (in dem gezeigten Ausführungsbeispiel dadurch, dass der Ventilteller 42 aus dem Ventilsitz 40 nach oben hin ausgehoben wird), dann wird der Dosierkolben 32 im Dosierzylinder 30 angehoben und dadurch entsprechend das sich im Produktvorhaltebehälter 2 befindliche Füllprodukt durch das Ansaugventil 4 und den Produktkanal 5 in den Dosierzylinder 30 eingesaugt.

Am oberen Totpunkt des Dosierkolbens 32 wird das Ansaugventil 4 wieder durch Absenken des Ventiltellers 42 in den Ventilsitz 40 geschlossen. Beim darauffolgenden Absenken des Dosierkolbens 32 wird das sich im Dosierzylinder 30 befindliche Füllproduktvolumen über den Füllproduktauslass 60 in den Behälter 100 ausgestoßen. Ein Auslassventil 62 ist in Form eines doppelt wirkenden pneumatischen Zylinders vorgesehen, mittels welchem der Füllproduktauslass 60 geöffnet und verschlossen werden kann. Beim Ansaugen des Füllprodukts aus dem Produktvorhaltebehälter 2 bei geöffnetem Ansaugventil 4 ist das Auslassventil 62 geschlossen, so dass die Saugwirkung des anhebenden Dosierkolbens 32 voll auf das Füllprodukt im Produktvorhaltebehälter 2 wirken kann.

Beim Ausschieben des im Dosierzylinder 30 aufgenommenen Füllprodukts durch Absenken des Dosierkolbens 32 ist das Ansaugventil 4 geschlossen und das Auslassventil 62 geöffnet, um den Füllproduktstrom ausschließlich durch den Füllproduktauslass 60 zu leiten.

Das Ansaugventil 4 und insbesondere der Ventilsitz 40 sind in einer Ebene E₁ angeordnet, welche im eingebauten Zustand der Dosiereinheit 3 oberhalb der durch den Boden 320 des Dosierkolbens 32 am unteren Totpunkt T_{U} definierten Ebene liegt. Entsprechend kann ein Luftpolster beziehungsweise Gaspolster, welches sich unterhalb des Bodens 320 des Dosierkolbens 32 ausgebildet hat, zumindest am unteren Totpunkt T_{U} des Dosierkolbens 32 über den Produktkanal 5 und das Ansaugventil 4 wieder in den Produktvorhaltebehälter 2 zurückgetrieben werden. Die Luft beziehungsweise das Gas strömt entsprechend von diesem unteren Totpunkt T_{U} von dem Boden 320 des Dosierkolbens 32 ab und über den Produktkanal 5 und das Ansaugventil 4 in den Produktvorhaltebehälter 2 hinein.

Der Produktkanal 5 ist bevorzugt schräg nach oben zum Ansaugventil 4 hin ausgerichtet, so dass sich auch im Produktkanal 5 keine Luftpolster beziehungsweise Gasblasen festsetzen können, sondern diese ebenfalls durch das Ansaugventil 4 hindurch wieder in den Produktvorhaltebehälter 2 ausgestoßen werden.

Auf diese Weise ist es auch möglich, zu Produktionsbeginn eine vollständige Entlüftung des Dosierzylinders 30 durchzuführen, derart, dass sich kein Gas beziehungsweise keine Luft mehr unterhalb des Bodens 320 des Dosierkolbens 32 befindet. Weiterhin kann sich während der Produktion ansammelndes Gas beziehungsweise Luft, welche ein Luftpolster unterhalb des Dosierkolbens 32 ausbilden würde, am unteren Totpunkt T_{U} über das Ansaugventil 4 ausgestoßen werden.

Auf diese Weise erhöht sich die Dosiergenauigkeit der Dosiereinheit 3, da das Dosiervolumen entsprechend zu einem höheren Bestandteil oder gar vollständig mit dem Füllprodukt ausgefüllt ist, und Ungenauigkeiten aufgrund eines undefiniert vorliegenden Luft- oder Gasvolumens, welches zusätzlich noch kompressibel ist, vermieden werden.

Der Ventilteller 42 des Ansaugventils 4 wird über eine Ventilstange 44 angehoben und abgesenkt, welche ihrerseits über einen pneumatischen Ventilantrieb 46 angetrieben wird. Eine Abdichtung der beweglichen Teile des Ansaugventils 4 gegenüber dem Füllprodukt beziehungsweise der Umgebung wird durch einen Faltenbalg 48 erreicht.

Wie sich aus Figur 1 sofort ergibt, wird der Faltenbalg 48 des Ansaugventils 4 von einem Produktstrom so umflossen, dass der Faltenbalg 48 in axialer Richtung mit dem Produktstrom beaufschlagt wird. Entsprechend wird der Faltenbalg 48 in Längsrichtung um- beziehungsweise überströmt. Der Faltenbalg 48 besteht bevorzugt aus PTFE oder ist als metallischer Faltenbalg ausgebildet. Die entsprechende Ausrichtung des Faltenbalges 48 derart, dass der Faltenbalg 48 in Längsrichtung umströmt wird, ermöglicht einen verschleißarmeren Betrieb, da die aus dem Stand der Technik bekannte, im Wesentlichen senkrechte Umströmung des Faltenbalges bei einer radialen Anordnung des Ansaugventiles entfällt und entsprechend die mechanische Querbelastung des Faltenbalges 48 im gezeigten Ausführungsbeispiel deutlich reduziert ist. Weiterhin können beispielsweise faserige Bestandteile des Füllproduktes weniger leicht zwischen den Falten des Faltenbalges verbleiben, da sie während des Produktausflusses ausgeschwemmt werden beziehungsweise auch bei einer Reinigung besser erfasst werden. Entsprechend führt die gezeigte Umströmung des Faltenbalges 48 zu einer reduzierten Wechsellastbeanspruchung im Vergleich zu der im Wesentlichen senkrechten Anströmung gemäß dem Stand der Technik. Die Verwendung eines geeigneten Materials für den Faltenbalg 48, beispielsweise die Verwendung von PTFE, reduziert den thermischen beziehungsweise chemischen Anteil der Verschleißparameter.

Die Anordnung des Ventilsitzes 40 in einer waagerechten Position und bevorzugt im Wesentlichen bündig mit der Bodenplatte 20 des Produktvorhaltebehälters 2 ermöglicht es weiterhin, dass am Produktionsende der Produktverlust gegenüber den herkömmlichen radialen Anordnungen des Ansaugventils reduziert wird. Insbesondere kann ein Ansaugen des Füllproduktes solange durchgeführt werden, wie das Ansaugventil 4 noch von Füllprodukt bedeckt ist. Ein vorzeitiges Ansaugen von Luft, wie es bei den radialen Ansaugventilen in deren oberem Ventilbereich bekannt war, findet durch das waagerecht angeordnete Ansaugventil 4 nicht statt. Entsprechend kann der Produktvorhaltebehälter 2 auch über die Dosiereinheiten 3 im Wesentlichen restentleert werden.

Eine Restentleerung kann beispielsweise dadurch durchgeführt werden, dass unterhalb des Produktauslasses 60 gezielt eine Auffangvorrichtung angeordnet wird, in welche hinein die Produktreste aus dem Produktvorhaltebehälter 2 hereingepumpt werden.

Sowohl der Antrieb 46 des Ansaugventils 4, als auch der Antrieb des Auslassventils 62 sind im gezeigten Ausführungsbeispiel pneumatisch angesteuert. Die hierzu benötigte Druckluft wird der Dosiereinheit 3 über einen in der Bodenplatte 20 des Produktvorhaltebehälters 2 eingebrachten Druckmedienkanal 22 zugeführt, wobei der Anschluss über entsprechende Bohrungen in dem die Dosiereinheit 3 ausbildenden Körper vorgesehen ist. Entsprechend kann auf aufwändige Verschlauchungen oder Verrohrungen verzichtet werden, da bevorzugt bereits das Einsetzen der Dosiereinheit 3 zu einer Verbindung der jeweiligen Anschlussbohrungen mit dem Druckmedienkanal 22 führt.

Das Ansaugventil 4 und das Auslassventil 62 werden über mechanische Schaltnocken 70, 72 geschaltet, welche über in Figur 1 nicht gezeigte feste oder pneumatisch aktivierbare Steuerelemente am nicht-drehenden Teil der Vorrichtung 1 geschaltet werden. Entsprechend wird an bestimmten Drehpositionen beziehungsweise an bestimmten Arbeitswinkeln der Vorrichtung 1 beim Umlaufen die jeweilige Schaltnocke 70, 72 so geschaltet, dass entweder das Ansaugventil 4 geöffnet beziehungsweise geschlossen wird oder das Auslassventil 62 geöffnet beziehungsweise geschlossen wird. Durch die mechanisch angesteuerten Schaltnocken 70, 72 ist ein mechanisch einfacher Aufbau möglich, welcher auf eine aufwändige Steuerung des Ansaugventils 4 und/oder des Auslassventils 62 im rotierenden Teil der Vorrichtung 1 verzichtet.

Bei Verwendung von pneumatisch aktivierbaren Steuerelementen, welche mit den Schaltnocken 70, 72 in Eingriff kommen, kann eine zusätzlich gezielte Sperrung von Dosiereinheiten 3 erreicht werden, welche dann beispielsweise gezielt zu- oder weggeschaltet werden können. Weiterhin kann hierüber eine gezielte Öffnung einer oder mehrerer Dosiereinheiten zum Restentleeren des Produktvorhaltebehälters 2 an einer vorgegebenen Position erreicht werden.

Bevorzugt ist in der Bodenplatte 20 des Produktvorhaltebehälters 2 nicht nur eine Druckmedienzuleitung 22, sondern auch eine Abluftleitung vorgesehen, mittels welcher die verbrauchte Druckluft aus den Ventilantrieben des Ansaugventils 4 und des Auslassventils 62 aufgefangen werden kann, ohne dass die Druckluft in die produktberührten Bereiche gelangen würde.

Die Ventilstange 44, welche den Ventilteller 42 des Ansaugventils 4 in den Ventilsitz 40 absenkt oder diesen anhebt, ist im gezeigten Ausführungsbeispiel parallel zur Hubrichtung X des Dosierkolbens 32 ausgerichtet. Auch die Öffnungs- beziehungsweise Schließrichtung des Auslassventils 62 ist in Hubrichtung X angeordnet. Die Hubrichtung X ist weiterhin parallel zur Rotationsachse R des Produktvorhaltebehälters 2 im Produktionsbetrieb.

Durch die parallele Anordnung der Ventilstange 44 beziehungsweise der Öffnungs- und Schließrichtung des Ansaugventils 4 zur Hubrichtung X des Dosierzylinders 32 kann ebenfalls erreicht werden, dass eine einfache Restentleerung des Produktvorhaltebehälters 2 und ein zuverlässiges Ausstoßen von Restgas unterhalb des Bodens 320 des Dosierzylinders 32 erreicht werden kann. Dies ist insbesondere dann der Fall, wenn der Ventilsitz 40 oberhalb des Bodens 320 des Dosierkolbens 32 in dessen unterem Totpunkt liegt.

Die Dosiereinheit 3 ist bevorzugt vollständig modular aufgebaut, derart, dass die Dosiereinheit 3 als funktionsbereite Einheit an der Bodenplatte 20 des Produktvorhaltebehälters 2 angebracht werden kann und eine in sich abgeschlossene funktionale Einheit darstellt. Zum Austausch, beispielsweise bei einem Defekt, kann die gesamte Dosiereinheit 3 abgebaut und durch eine andere ersetzt werden. Hierdurch können Wartungs- beziehungsweise Reparaturzeiten verringert werden.

Das Auslassventil 62 kann als Membranventil, als Quetschventil oder als Sitzventil ausgebildet sein.

Die Ventile können elektropneumatisch, pneumatisch, elektromagnetisch oder elektromotorisch, beispielsweise durch Servomotoren, Stellmotoren oder Schrittmotoren, angesteuert werden.

Das Auslassventil 62 kann beispielsweise in Form eines Pneumatikzylinders ausgebildet sein, wobei der Hub des Auslassventils 62 durch mechanische Mittel, beispielsweise manuell einsetzbare und austauschbare Hubbegrenzungen oder durch pneumatische Mittel, beispielsweise einem doppelstufigen Zylinder, variierbar ist.

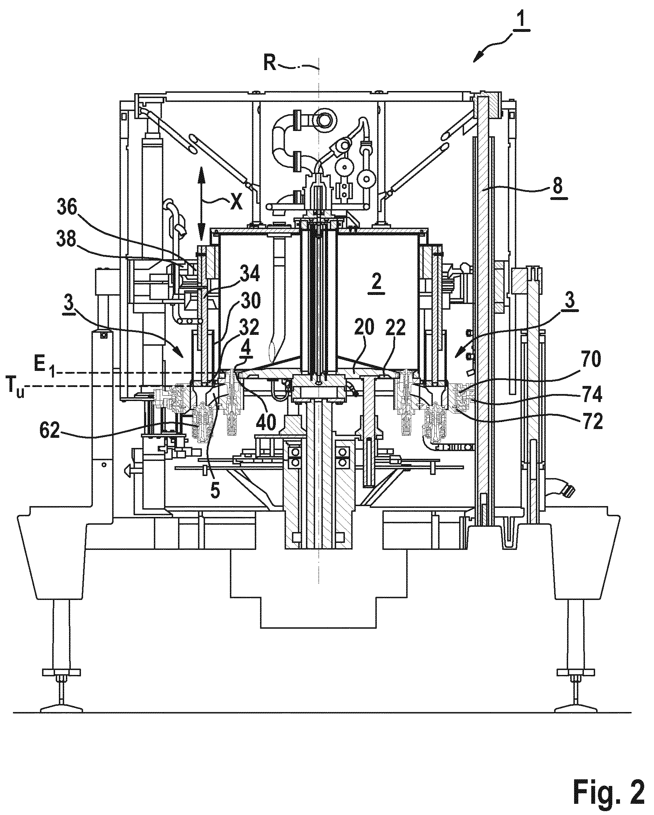

In Figur 2 ist eine weitere Vorrichtung 1 gezeigt, welche wiederum einen Produktvorhaltebehälter 2, eine Dosiereinheit 3 mit einem Dosierzylinder 30 und einem Dosierkolben 32 aufweist. Ein Ansaugventil 4, dessen Ventilsitz 40 wiederum auf einer Ebene E₁ angeordnet ist, welche oberhalb des unteren Totpunktes T_{U} des Dosierkolbens 32 liegt, ist ebenfalls vorgesehen. Das Ansaugventil 4 ist mit dem Dosierzylinder 30 über einen schräg nach oben gerichteten Produktkanal 5 verbunden. Ein Auslassventil 62 ist ebenfalls vorgesehen.

Der gezeigte Aufbau in der Figur 2 entspricht im Wesentlichen dem Aufbau, welcher auch aus der Figur 1 bekannt ist.

Aus der Figur 2 ergibt sich weiterhin, dass mehrere Dosiereinheiten 3 vorgesehen sind, welche am Umfang des Produktvorhaltebehälters 2 angeordnet sind.

Das Gestänge 34, welches mit dem Dosierkolben 32 verbunden ist, ist über eine Zwangsführung in Form einer Kurvensteuerung mit einer Kurvenrolle 36, welche in einer entsprechenden Steuerkurve 38 verläuft, angesteuert. Die Steuerkurve 38 ist dabei am stationären Gestell 8 der Vorrichtung 1 gehalten.

Die Steuernocken 70, 72 werden in dem gezeigten Ausführungsbeispiel durch mechanische Schaltmittel 74, welche am stationären Gestell 8 angeordnet sind, an den entsprechenden Winkelpositionen angesteuert.

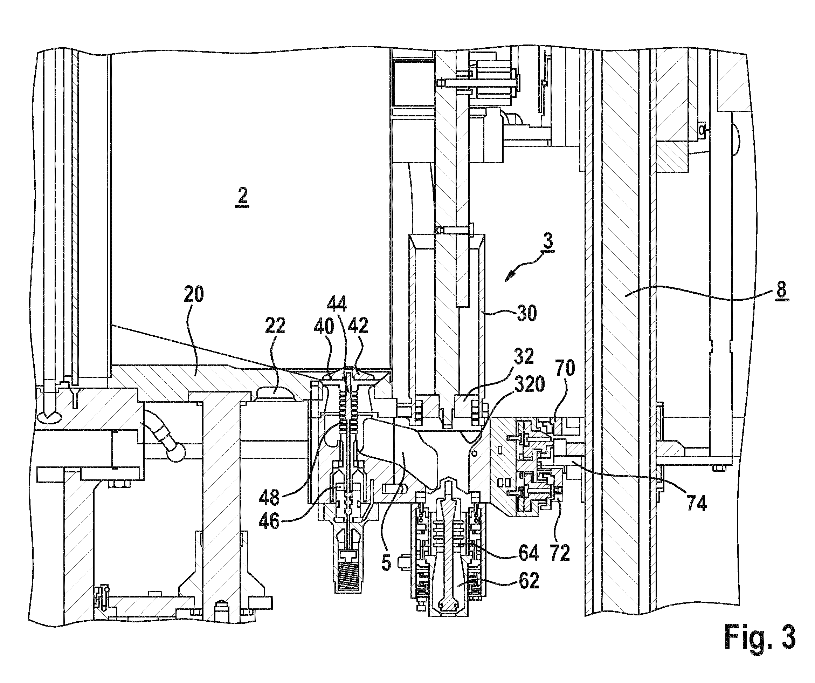

In Figur 3 ist eine schematische Detailvergrößerung einer Dosiereinheit 3 mit Anbindung am Produktvorhaltebehälter 2 gemäß Figur 2 gezeigt.

Die Anordnung des Ventilsitzes 40 ist im Wesentlichen bündig abschließend mit der Bodenplatte 20 des Produktvorhaltebehälters 2 ausgebildet, so dass Füllprodukt fast vollständig aus dem Produktvorhaltebehälter 2 restentleert werden kann. Die schräge Anordnung des Produktkanals 5 sowie die Anordnung des Bodens 320 des Dosierkolbens 32 auf einer Ebene unterhalb der Ebene des Ventilsitzes 40 ist hier besonders gut zu erkennen.

Weiterhin ist die Ausbildung der Faltenbälge 48, 64 des Ansaugventils 4 sowie des Auslassventils 62 so zu erkennen, dass ein Umströmen in Längsrichtung stattfindet.

Soweit anwendbar, können alle einzelnen Merkmale, die in den einzelnen Ausführungsbeispielen dargestellt sind, miteinander kombiniert und/oder ausgetauscht werden, ohne den durch die nachfolgenden Ansprüche definierten Bereich der Erfindung zu verlassen.

### Bezugszeichenliste

- 1: Vorrichtung zum Dosieren eines Füllprodukts
- 100: zu befüllender Behälter
- 2: Produktvorhaltebehälter
- 20: Bodenplatte
- 22: Druckmedienkanal in der Bodenplatte
- 3: Dosiereinheit
- 30: Dosierzylinder
- 32: Dosierkolben
- 34: Gestänge
- 36: Kurvenrolle
- 38: Steuerkurve
- 320: Boden des Dosierkolbens
- 4: Ansaugventil
- 40: Ventilsitz
- 42: Ventilteller
- 44: Ventilstange
- 46: Ventilantrieb
- 48: Faltenbalg
- 5: Produktkanal
- 60: Füllproduktauslass
- 62: Auslassventil
- 64: Faltenbalg
- 70: mechanischer Schaltnocken
- 72: mechanischer Schaltnocken
- 74: Schaltmittel
- 8: stationäres Gestell

- E₁: Ebene des Ventilsitzes
- Tᵤ: unterer Totpunkt
- R: Rotationsachse
- X: Hubrichtung des Dosierkolbens

## Patentansprüche

1. Vorrichtung (1) zum Dosieren eines Füllproduktes in einen zu befüllenden Behälter (100), umfassend einen rotierbaren Produktvorhaltebehälter (2), eine Dosiereinheit (3) mit einem Dosierzylinder (30) und einem darin zwischen einem oberen Totpunkt und einem unteren Totpunkt (T_{U}) verschiebbar angeordneten Dosierkolben (32), sowie einem Ansaugventil (4) mit einem Ventilsitz (40) zum Ansaugen des Füllproduktes aus dem rotierbaren Produktvorhaltebehälter (2), wobei
der Ventilsitz (40) im Betrieb auf einer Ebene (E₁) oberhalb der durch den Boden (320) des Dosierkolbens (32) am unteren Totpunkt (T_{U}) ausgebildeten Ebene angeordnet ist, wobei zum Austreiben des Füllproduktes aus dem Dosierzylinder (30) ein Auslassventil (62) vorgesehen ist, welches mit dem Dosierzylinder (30) in Fluidverbindung steht, und wobei der rotierbare Produktvorhaltebehälter (2) mit einer Bodenplatte (20) vorgesehen ist und in der Bodenplatte (20) mindestens ein Druckmedienkanal (22) zur Beaufschlagung mindestens eines Ventilantriebes (46) des Ansaugventils (4) und/oder des Auslassventils (62) mit einem Druckmedium vorgesehen ist.

2. Vorrichtung (1) gemäß Anspruch 1, **dadurch gekennzeichnet, dass** der Ventilsitz (40) im Betrieb im Wesentlichen waagerecht angeordnet ist und bevorzugt waagerecht mit einem rotierbaren Produktvorhaltebehälter (2) verbunden ist.

3. Vorrichtung (1) gemäß einem der vorstehenden Ansprüche, **dadurch gekennzeichnet, dass** das Ansaugventil (4) und der Dosierzylinder (30) über einen Produktkanal (5) miteinander in Fluidverbindung stehen, wobei sich der Produktkanal (5) schräg nach oben zum Ansaugventil (4) hin erstreckt.

4. Vorrichtung (1) gemäß einem der vorstehenden Ansprüche, **dadurch gekennzeichnet, dass** die beweglichen Teile des Ansaugventils (4) mittels eines Faltenbalges (48) gegen das Füllprodukt abgedichtet sind.

5. Vorrichtung (1) gemäß einem der vorstehenden Ansprüche, **dadurch gekennzeichnet, dass** die Dosiereinheit (3) mit dem Ansaugventil (4) an der Unterseite des Produktvorhaltebehälters (2) angeordnet ist, und bevorzugt der Ventilsitz (40) des Ansaugventils (4) an einer Bodenplatte (20) eines rotierbaren Produktvorhaltebehälters (2) montiert ist.

6. Vorrichtung (1) gemäß einem der vorstehenden Ansprüche, **dadurch gekennzeichnet, dass** die Dosiereinheit (3) modular aufgebaut ist und als funktionsbereite Einheit mit einem rotierbaren Produktvorhaltebehälter (2) verbindbar ist.

7. Vorrichtung (1) gemäß einem der vorstehenden Ansprüche, **dadurch gekennzeichnet, dass** das Ansaugventil (4) und bevorzugt ein Auslassventil (62) über mechanische Schaltnocken (70,72) schaltbar sind, bevorzugt pneumatisch schaltbar sind.

8. Vorrichtung (1) gemäß Anspruch 7, **dadurch gekennzeichnet, dass** die mechanischen Schaltnocken (70, 72) mittels feststehender oder aktivierbarer Schaltmittel (74), welche an einem feststehenden Teil (8) der Vorrichtung (1) angeordnet sind, beim Vorbeistreichen der Schaltnocken (70, 72) schaltbar sind.

9. Vorrichtung (1) gemäß einem der vorstehenden Ansprüche, **dadurch gekennzeichnet, dass** ein rotierbarer Produktvorhaltebehälter (2) mit einer Bodenplatte (20) vorgesehen ist, an welcher die Dosiereinheit (3) derart befestigt ist, dass das Ansaugventil (4) und bevorzugt der Ventilsitz (40) des Ansaugventils (4) im Wesentlichen bündig mit der Innenseite der Bodenplatte (20) abschließt.

10. Vorrichtung (1) gemäß Anspruch 1, **dadurch gekennzeichnet, dass** der Druckmedienkanal (22) in der Bodenplatte (20) mit einer entsprechenden Druckmedienführung in der Dosiereinheit (3) verbunden wird, wobei der Druckmedienkanal in der Dosiereinheit (3) bevorzugt im Körper der Dosiereinheit (3) verläuft.

11. Vorrichtung (1) gemäß einem der vorstehenden Ansprüche, **dadurch gekennzeichnet, dass** die Betätigungsrichtung des Ansaugventils (4) in einer Achse verläuft, die parallel zur Hubachse (X) des Dosierkolbens (32) und parallel zur Rotationsachse (R) des Produktvorhaltebehälters (2) liegt.

## Claims

1. Device (1) for dispensing a filling product into a container (100) to be filled, comprising a rotatable product storage container (2), a dispensing unit (3) with a dispensing cylinder (30) and arranged therein a dispensing piston (32) which can be moved between an upper dead point and a lower dead point (Tᵤ), and a suction valve (4) with a valve seat (40) for sucking the filling product out of the rotatable product storage container (2), wherein
during operation, the valve seat (20) is arranged on a plane (E1) above the plane formed by the base (320) of the dispensing piston (32) at the lower dead point (Tᵤ), wherein for expelling the filling product from the dispensing cylinder (30), an outlet valve (62) is provided which is in fluid connection with the dispensing cylinder (30), and wherein
the rotatable product storage container (2) is provided with a base plate (20) and in the base plate (20) at least one pressure medium channel (22) for applying a pressure medium to a valve actuator (46) of the suction valve (4) and/or the outlet valve (62) is provided.

2. Device (1) according to claim 1, **characterised in that** during operation the valve seat (40) is arranged substantially horizontally and is preferably horizontally connected with a rotatable product storage container (2).

3. Device (1) according to any of the preceding claims, **characterised in that** the suction valve (4) and the dispensing cylinder (30) are in fluid connection with each other via a product channel (5), wherein the product channel (5) extends obliquely upwards to the suction valve (4).

4. Device (1) according to any of the preceding claims, **characterised in that** the movable parts of the suction valve (4) are sealed from the filling products by means of a bellow (48).

5. Device (1) according to any of the preceding claims, **characterised in that** the dispensing unit (3) with the suction valve (4) is arranged on the underside of the product storage container (2) and preferably the valve seat (40) of suction valve (4) is mounted on a base plate (20) of a rotatable product storage container (2).

6. Device (1) according to any of the preceding claims, **characterised in that** the dispensing unit (3) is modular in design and can be connected as a ready-to-use unit to a rotatable product storage container (2).

7. Device (1) according to any of the preceding claims, **characterised in that** the suction valve (4) and preferably an outlet valve (62) can be operated via mechanical switching cams (70, 72), preferably pneumatically operated.

8. Device (1) according to claim 7, **characterised in that** the mechanical switching cams (70, 72) can be operated by means of fixed or activatable switching means (74), arranged on a stationary part (8) of the device (1), by the passage of the switching cams (70, 72).

9. Device (1) according to any of the preceding claims, **characterised in that** a rotatable product storage container (2) with a base plate (20) is provided to which the dispensing unit (3) is attached in such a way that the suction valve (4) and preferably the valve seat (40) of the suction valve (4) are flush with the inside of the base plate (20).

10. Device (1) according to claim 1, **characterised in that** the pressure medium channel (22) in the base plate (20) is connected with a corresponding pressure medium guide in the dispensing unit (3), wherein the pressure medium channel in the dispensing unit (3) is preferably arranged in the body of the dispensing unit (3).

11. Device (1) according to any of the preceding claims, **characterised in that** the operating direction of the suction valve (4) runs in an axis that is parallel to the stroke axis (X) of the dispensing piston (32) and parallel to the rotational axis (R) of the product storage container (2).

## Revendications

1. Dispositif (1) pour doser un produit de remplissage dans un récipient à remplir (100), comprenant un récipient de fourniture de produit (2) rotatif, une unité de dosage (3) avec un cylindre de dosage (30) et un piston de dosage (32) aménagé dans le cylindre de dosage (32) de manière à pouvoir se déplacer entre un point mort haut et un point mort bas (T_{U}), ainsi qu'une soupape d'aspiration (4) avec un siège de soupape (40) pour aspirer le produit de remplissage du récipient de fourniture de produit (2) rotatif, dans lequel :
le siège de soupape (40) est disposé en service sur un plan (E1) au-dessus du plan formé par le fond (320) du piston de dosage (32) au point mort bas (T_{U}), dans lequel, pour l'éjection du produit de remplissage du cylindre de dosage (30), une soupape de sortie (62) est prévu, qui est en communication fluidique avec le cylindre de dosage (30) et dans lequel le récipient de fourniture de produit (2) rotatif est pourvu d'une plaque de fond (20) et il est prévu dans la plaque de fond (20) au moins un canal d'agent de pression (22) pour appliquer au moins une commande de soupape (46) de la soupape d'aspiration (4) et/ou de la soupape de sortie (62) par un agent de pression.

2. Dispositif (1) selon la revendication 1, **caractérisé en ce que** le siège de soupape (40) est disposé en service de manière sensiblement horizontale et est lié de préférence horizontalement avec un récipient de fourniture de produit (2) rotatif.

3. Dispositif (1) selon l'une des revendications précédentes, **caractérisé en ce que** la soupape d'aspiration (4) et le cylindre de dosage (30) sont en communication fluidique l'un avec l'autre via un canal de produit (5), dans lequel le canal de produit (5) s'étend incliné vers le haut en direction de la soupape d'aspiration (4).

4. Dispositif (1) selon l'une des revendications précédentes, **caractérisé en ce que** les parties mobiles de la soupape d'aspiration (4) sont étanchées vis-à-vis du produit de remplissage au moyen d'un soufflet (48).

5. Dispositif (1) selon l'une des revendications précédentes, **caractérisé en ce que** l'unité de dosage (3) est aménagée avec la soupape d'aspiration (4) sur la face inférieure du récipient de fourniture de produit (2) et, de préférence, le siège de soupape (40) de la soupape d'aspiration (4) est monté sur une plaque de fond (20) d'un récipient de fourniture de produit (2) rotatif.

6. Dispositif (1) selon l'une des revendications précédentes, **caractérisé en ce que** l'unité de dosage (3) est conçue en mode modulaire et peut être raccordée comme unité prêt à fonctionner à un récipient de fourniture de produit (2) rotatif.

7. Dispositif (1) selon l'une des revendications précédentes, **caractérisé en ce que** la soupape d'aspiration (4) et, de préférence, une soupape de sortie (62) peuvent être commutées via des cames de commutation mécaniques (70, 72), de préférence commutées en mode pneumatique.

8. Dispositif (1) selon la revendication 7, **caractérisé en ce que** les cames de commutation mécaniques (70, 72) peuvent être commutées à l'aide de moyens de commutation (74) fixes ou activables, qui sont agencés sur une partie fixe (8) du dispositif (1), lors du passage des cames de commutation (70, 72).

9. Dispositif (1) selon l'une des revendications précédentes, **caractérisé en ce qu'**un récipient de fourniture de produit (2) rotatif est pourvu d'une plaque de fond (20) sur laquelle l'unité de dosage (3) est fixée en sorte que la soupape d'aspiration (4) et, de préférence, le siège de soupape (40) de la soupape d'aspiration (4) se ferment sensiblement de niveau avec la partie interne de la plaque de fond (20).

10. Dispositif (1) selon la revendication 1, **caractérisé en ce que** le canal d'agent de pression (22) dans la plaque de fond (20) est relié à un guide d'agent de pression correspondant dans l'unité de dosage (3), dans lequel le canal d'agent de pression s'étend dans l'unité de dosage (3), de préférence dans le corps de l'unité de dosage (3).

11. Dispositif (1) selon l'une des revendications précédentes, **caractérisé en ce que** la direction de commande de la soupape d'aspiration (4) s'étend dans un axe qui est parallèle à l'axe de levage (X) du piston de dosage (32) et parallèle à l'axe de rotation (R) du récipient de fourniture de produit (2).
